## Europäisches Patentamt

## European Patent Office

## Office européen des brevets

(19)

(11) Veröffentlichungsnummer: **0 024 441**

**A1**

(12)

# EUROPÄISCHE PATENTANMELDUNG

(21) Anmeldenummer: **79103080.2**

(22) Anmeldetag: **22.08.79**

(51) Int. Cl.³: **A 01 M 7/00**
**A 01 C 21/00**

(43) Veröffentlichungstag der Anmeldung:
**11.03.81 Patentblatt 81/10**

(84) Benannte Vertragsstaaten:
**BE CH DE FR GB IT LU NL SE**

(71) Anmelder: **RUHR-STICKSTOFF AKTIENGESELLSCHAFT**
**Königsallee 21**
**D-4630 Bochum 1(DE)**

(72) Erfinder: **Merget, Norbert, Dr.**
**Kulmerstrasse 12**
**D-4630 Bochum(DE)**

(72) Erfinder: **Norden, Jürgen**
**Samborner Strasse 97**
**D-4630 Bochum(DE)**

(74) Vertreter: **Steil, Hanna, Dipl.-Chem. et al,**
**RSP PATENTE-PB 40 Holsterhauser Strasse 160**
**Postfach 2840**
**D-4690 Herne 2(DE)**

(54) **Verfahren und Vorrichtung zum Aufbringen von Flüssigkeiten auf Getreidekulturen.**

(57) Ein Verfahren zum Aufbringen von Flüssigkeiten, die Düngemittel und/oder Pflanzenschutzmittel enthalten, auf Getreidekulturen, wobei der Abspritzpunkt unterhalb der Bestandesoberfläche liegt. Für Flüssigkeiten, die auf dem Halmgrund bzw. Boden aufgebracht werden sollen, ist ein Abspritzwinkel von 90 - 135° besonders geeignet, zum Aufbringen von Flüssigkeiten auf Ähren und Blätterdach ist ein Abspritzwinkel von 220 - 260° besonders geeignet. Weiterhin eine Vorrichtung zum Aufbringen derartiger Flüssigkeiten, versehen mit einem Spritzbalken (1) und Düsen (7) und Verlängerungsrohren (3) dazwischen. Die Verlängerungsrohre (3) können eine Biegung bis zu 90° besitzen. Aus den Düsen (7) kann die Flüssigkeit als Kugel- oder Flachstrahl austreten.

Fig. 4

Fig. 3

Fig. 2

Fig. 1

EP 0 024 441 A1

-2-

Ruhr-Stickstoff   Aktiengesellschaft

---

Verfahren und Vorrichtung zum Aufbringen von
Flüssigkeiten auf Getreidekulturen

---

Das Aufbringen von Düngemittellösungen bzw. Flüssigkeiten, die Pflanzenbehandlungsmittel, wie Pflanzenschutzmittel, gegebenenfalls in Mischung mit Düngemittel enthalten, auf Getreidekulturen geschieht
üblicherweise mittels eines Fahrzeuges, auf dem quer
zur Fahrtrichtung ein Spritzbalken bzw. Spritzrohr
angebracht ist. Die einzelnen Düsen befinden sich direkt
am Spritzrohr, das sich stets oberhalb der Bestandesoberfläche bewegt. Dadurch entsteht der Nachteil, daß die
Pflanzen grundsätzlich von oben her besprüht und getroffen
werden. Die Verteilung der Spritzbrühe auf der Pflanze
erfolgt daher jeweils nicht nach funktionellen Gesichtspunkten, sondern unterliegt dem Zwang, der sich aus der
Anordnung des Abspritzpunktes oberhalb des Bestandes
ergibt. Damit wird die der Indikation angepaßte optimale
Wahl von Trägerstoffmenge, Spritzdruck und konstruktiven
Merkmalen der Düsen beeinträchtigt. Die Gefahr der Abtrift
wird erhöht und kann zu einer Gefährdung oder Belastung
der Umwelt führen. Pflanzenteile werden auch dann getroffen, wenn ihre Benetzung unerwünscht ist oder gar ausgeschlossen werden sollte. Als Folge entsteht ein Anwendungs-

-2-

-2-

risiko durch Pflanzenschädigungen. Die Fehlplazierung
führt zur Mittelverschwendung und unnötigen Belastung mit Wirkstoffen; die verminderte Benetzung
der Zielfläche schränkt die Wirkung der beabsichtigten
Maßnahmen ein.

Gemäß vorliegender Erfindung werden diese Schwierigkeiten
dadurch überwunden, daß der Abspritzpunkt der Flüssigkeiten, die Düngemittel und/oder Pflanzenschutzmittel
enthalten, unterhalb der Bestandesoberfläche verlegt
wird. Dies geschieht dadurch, daß zwischen Spritzbalken
bzw. -rohr und der Düse ein nach unten gerichtetes
Verlängerungsrohr zwischengeschaltet wird. Dieses
hat zweckmäßigerweise eine Biegung bis zu 90$^{o}$, so daß es
so montiert werden kann, daß seine Oeffnung entgegen der
Fahrtrichtung der Sprühvorrichtung gerichtet ist.
Als Sprühdüsen werden bevorzugt solche verwendet,
bei denen die Flüssigkeit als Flach- oder Kegelstrahl
austritt, z.B. die an sich bekannten Lippendüsen.

Der Abspritzwinkel - d.h. der Winkel zwischen der Fortbewegungsrichtung der Sprühvorrichtung und der Austrittsrichtung der versprühten Flüssigkeit - kann
dem jeweiligen Anwendungszweck angepaßt werden. So hat
sich für Düngemittel- bzw. Pflanzenschutzmittellösungen, die auf den Halmgrund bzw. auf den Boden ausgebracht werden sollen, ein Abspritzwinkel von
90$^{o}$ bis 135$^{o}$ bewährt. Da der Abspritzpunkt unterhalb
der Bestandesoberfläche liegt, ergibt sich der entscheidende Vorzug, daß das Blätterdach als Filter für
die applizierte Menge entfällt. Dadurch steht die volle
Menge der Spritzbrühe für die Benetzung der Zielfläche,
also im Bereich des Halmgrundes, gegebenenfalls des Bodens zur Verfügung. Gegenüber der zum Zwecke der Bestandesdurchdringung angewendeten großtropfigen Applikation kann mit der ergiebigeren, besser benetzenden, feintropfigen Verdüsung gearbeitet werden. Eine Abtrift entfällt weitgehend, das Herantragen der feinen und feinsten Tropfen an die Zielfläche wird durch die Luftbewegung im Bestand erreicht.

Zur Aufbringung von Pflanzenschutzmittellösungen bzw.-suspensionen, die gegebenenfalls geringere Mengen an Düngemitteln enthalten können, auf Aehren und Blätterdach haben sich Abspritzwinkel von 220$^{o}$ bis 260$^{o}$ bewährt. Durch die der Fahrtrichtung entgegengesetzte Abspritzrichtung zielt der Spritzstrahl auch auf die Schattenseiten (bezogen auf die Benetzung) der Aehren. Der Spritzstrahl überwindet seinen Totpunkt und steht abermals für eine Rundumbenetzung zur Verfügung. Hierdurch ergeben sich für alle Seiten der Aehren günstige Benetzungsvoraussetzungen. Darüberhinaus bietet dieses Verfahren gegenüber der bisher üblichen Methode bessere Voraussetzungen für die Benetzung nicht nur deshalb, weil die Zielfläche zweimal von einem Abspritzstrahl getroffen wird, sondern weil jeder dieser Strahlen für sich selbst bessere Voraussetzungen für die vollständige Rundumbenetzung bietet.

Für die Flüssigdüngung, z.B. mit Ammoniumnitrat-Harnstoff-Lösungen auf den Boden empfiehlt sich, die Flüssigkeit im Vollstrahl oder verdüst unter einem Abspritzwinkel von 90$^{o}$ bis 135$^{o}$ auszustoßen.Durch die Verlegung des

-4-

Abspritz- bzw. Ausstoßpunktes unter die Bestandesoberfläche läßt sich diese Düngung auch im fortgeschrittenen vegetativen Stadium noch risikolos
vornehmen. Die für die Ertragsbildung wichtigen
Fahnenblätter werden fast nicht getroffen, die
Ähren von ertragsschädigender Verätzung ausgeschlossen.

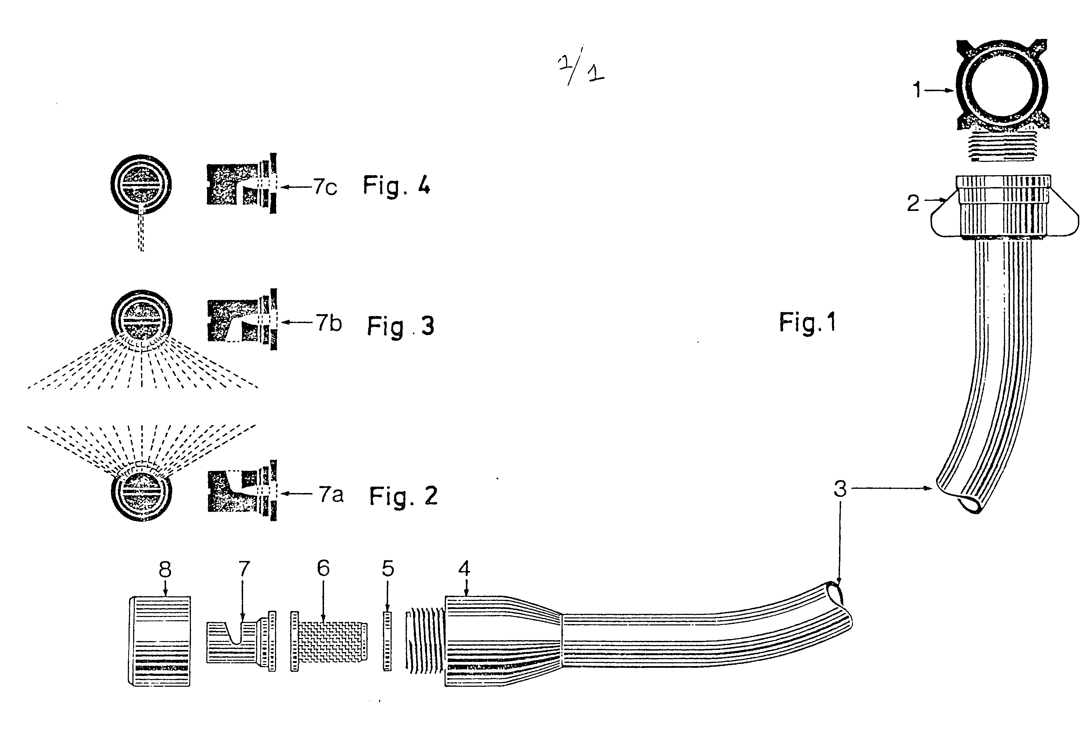

In der zugehörigen Zeichnung ist eine erfindungsgemäße Vorrichtung dargestellt. Fig. 1 zeigt den
Spritzbalken 1 mit einem Anschlußstutzen. An diesen
wird das um 90° gebogene Verlängerungsrohr 3 mittels
Überwurfmutter 2 angeschraubt. Am anderen Ende
des Verlängerungsrohres 3 ist eine Muffe mit
Gewindestutzen 4 aufgebracht. Mit der Überwurfmutter 8
werden die Düse 7, ein Rückschlagventil 6 sowie
ein Dichtring 5 gehalten.

In Fig. 2 ist eine Stellung der Düse 7 a dargestellt,
bei der diese nach oben sprüht, in Fig. 3 eine Düse 7 b,
die nach unten sprüht. Fig. 4 schließlich zeigt
eine Düse 7 c, die einen Vollstrahl nach unten entläßt.

Ruhr-Stickstoff Aktiengesellschaft

---

Verfahren und Vorrichtung zum Aufbringen
von Flüssigkeiten auf Getreidekulturen

---

Patentansprüche

1. Verfahren zum Aufbringen von Flüssigkeiten, enthaltend Düngemittel und/oder Pflanzenschutzmittel,
auf Getreidekulturen, d a d u r c h  g e k e n n -
z e i c h n e t, daß der Abspritzpunkt unterhalb
der Bestandesoberfläche liegt.

2. Verfahren nach Anspruch 1, d a d u r c h  g e -
k e n n z e i c h n e t, daß die Flüssigkeit unter
einem Abspritzwinkel von 90$^{\circ}$ bis 135$^{\circ}$ verdüst wird.

3. Verfahren nach Anspruch 1 zum Aufbringen von Flüssigkeiten,enthaltend Pflanzenschutzmittel, gegebenenfalls unter Zusatz geringer Düngemittelmengen,
d a d u r c h  g e k e n n z e i c h n e t , daß
die Flüssigkeit unter einem Abspritzwinkel von
220$^{\circ}$ bis 260$^{\circ}$ verdüst wird.

4. Verfahren nach Anspruch 1 zum Aufbringen von Flüssigkeiten,enthaltend Düngemittel, d a d u r c h  g e-
k e n n z e i c h n e t, daß die Flüssigkeit  im

-2-

Vollstrahl unter einem Abspritzwinkel von 90° bis 135° ausgestoßen wird.

5. Vorrichtung zur Durchführung des Verfahrens nach einem der Ansprüche 1 bis 4 mit einem Spritzbalken und Düsen, g e k e n n z e i c h n e t d u r c h Verlängerungsrohre (3) zwischen Spritzbalken (1) und Düsen (7).

6. Vorrichtung nach Anspruch 5, g e k e n n z e i c h n e t d u r c h eine Biegung der Verlängerungsrohre (3) bis zu 90°.

7. Vorrichtung nach Anspruch 5 oder 6, g e k e n n - z e i c h n e t d u r c h an sich bekannte Düsen (7), bei denen die Flüssigkeit als Kegel- oder Flachstrahl austritt.

0024441

2/1

Fig.1

Fig.2 7a

Fig.3 7b

Fig.4 7c

1 2 3 4 5 6 7 8

**Europäisches**
**Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 2 128 877 (H. OSTER) <br> * Spalte 1; Zeilen 53 bis 68 * <br> -- | 1,7 |
| | US - A - 3 147 568 (H.G. INHOFER) <br> * Spalte 2, Zeile 58 bis Spalte 3, Zeile 8 * <br> -- | 1 |
| | FR - A - 1 448 201 (GOLDEN ARROW MA-NUFACTURING LTD.) <br> * Fig. 3 bis 5 * <br> -- | 5 |
| | US - A - 3 117 725 (J.E. PALMER) <br> * Fig. 5 * <br> -- | 5 |
| | US - A - 3 143 295 (F.E. BOOKER) <br> * Fig. 4 * <br> ---- | 5 |

**KLASSIFIKATION DER ANMELDUNG (Int.Cl.3)**

A 01 M 7/00

A 01 C 21/00

**RECHERCHIERTE SACHGEBIETE (Int. Cl.3)**

A 01 C 21/00

A 01 C 23/00

A 01 M 7/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

X | Der vorliegende Recherchenbericht wurde für alle Patentansprüche erstellt.

| Recherchenort <br> Berlin | Abschlußdatum der Recherche <br> 17-04-1980 | Prüfer <br> SCHOFER |
|---|---|---|